# EUROPEAN PATENT APPLICATION

(11) **EP 1 949 822 A1**
(43) Date of publication of application: **30.07.2008**
(21) Application number: 06811699.5
(22) Date of filing: 12.10.2006
(51) Int. Cl.: A47C 27/10, G01D 5/353, G01L 5/00

(54) **AIR MAT DEVICE AND METHOD OF USING THE SAME**

(30) Priority: 07.11.2005 JP 2005322654
(71) Applicant: Nitta Corporation, Osaka-shi, Osaka 556-0022 (JP); The University of Tokyo, Bunkyo-Ku, Tokyo 113-8654 (JP)
(72) Inventor: OCHI, Shinya, Yamatokooriyama-shi, Nara 639-1085 (JP); SANADA, Hiromi, Tokyo 113-8654 (JP)
(74) Representative: Intes, Didier Gérard André
(86) International application number: PCT/JP2006/320411
(87) International publication number: WO 2007/052457

(57) **Abstract**

There is realized a configuration in which, even when pressure is concentrated, the pressure can be adjusted based on accurate and precise detection of pressure distribution, thereby providing sleeping comfort.

An air mattress device has a sensor (3, 6) that detects the distribution of pressure applied to an elastic sheet (33), by means of light emitting parts and light receiving parts of optical fibers uniformly distributed in the elastic sheet. Based on pressure distribution detected by the sensor, the air mattress device adjusts the amount of gas filled in an air mattress. The sensor can be disposed above the air mattress of the air mattress device.

## Description

### Technical Field

The present invention relates to an air mattress device and its use.

### Background Art

To prevent a pressure ulcer of a hospital inpatient, care-receiver, or the like, pressure adjustment is necessary in nursing or caring so as to prevent a pressure applied to a human body lying in a bed from being concentrated on a specific body part thereof. In order to adjust pressure, it is needed to measure pressure applied to a human body. For this purpose, a nurse or care-provider has been conventionally used a measurement instrument or the like for locally measuring interface pressure on a human body surface.

However, with such a local measurement instrument, an error tends to occur in pressure measurement, due to the difference in posture of a patient, or the like. In addition, many errors occur due to measurement by hand. Consequently, an effective pressure adjustment for preventing pressure ulcer has been impossible.

Instead of employing the above-described locally measuring method, a patent document 1 describes an air mattress device which is capable of measuring the distribution of an overall pressure applied to a human body, and automatically adjusting the pressure according to the measurement result of the pressure distribution. The air mattress device of the patent document 1 (mattress with pressure ulcer prevention apparatus) has a load sensor sheet to determine a pressure applied to a user. According to the overall pressure distribution detected by the load sensor sheet, the air mattress device is controlled, so that the amount of gas filled in an air mattress of the air mattress device is automatically controlled. This allows effective pressure adjustment with less measurement error, based on a wider range of pressure distribution information, unlike the pressure adjustment based on a local pressure measured by hand. Patent document 1: Japanese Unexamined Patent Publication No.2000-189472 (FIG. 3 and paragraph Nos.0004 and 0005)

### Disclosure of the Invention

### Problem to be Solved by the Invention

The load sensor sheet employed in the patent document 1 uses a pressure-sensitive element whose electrical resistance varies in accordance with a load. In a sensor sheet having this configuration, deformation such as wrinkles may occur due to pressure concentration or the like, thereby causing an error in pressure detection by a sensor. Like this, when a pressure is not accurately detected, pressure ulcer is not sufficiently prevented by means of controlling the air mattress.

In addition, when more precise pressure measurement is required, such as when monitoring a bed-rest posture of a user by means of pressure detected by a sensor, the sensor needs to be disposed on an upper portion of the air mattress so that a pressure is directly applied by the user to the sensor.
However, with a sensor sheet having such a structure disclosed in the patent document 1, the above-described wrinkles or the like are more likely to occur when the air mattress device is used in a state where a user directly contacts the sensor sheet.
Accordingly, pressure is not accurately measured. In addition, the feel of the sensor may deteriorate the sleeping comfort.

An object of the present invention is to provide an air mattress device which does not deteriorate the sleeping comfort, and which has a sensor capable of precisely and accurately detecting a pressure. It is a further object of the present invention to provide a use of such an air mattress device.

### Means for Solving the Problem

An air mattress device of the present invention includes: an air mattress having a plurality of air cells filled with a gas; an elastic sheet disposed on a surface of the air mattress, in which sheet a reachable range of light scattered varies in accordance with a magnitude of a pressure applied; a plurality of light emitting parts which are evenly distributed in the elastic sheet, and which emit light toward the elastic sheet; a plurality of light receiving parts which are respectively positioned close to the plurality of light emitting parts in the elastic sheet, and which receives the light scattered in the elastic sheet; pressure distribution detection means for detecting distribution of a pressure applied to the elastic sheet based on intensity of light received by each of the plurality of light receiving parts; and gas amount adjustment means for adjusting an amount of gas filled in each of the plurality of air cells based on the distribution of pressure applied to the elastic sheet detected by the pressure distribution detection means.

The air mattress device according to the present invention has the elastic sheet, thereby providing excellent responsivity to pressure applied by an object on the air mattress. That is, even when a pressure is not evenly applied in a contact face of the object and the air mattress; e.g., when pressure is concentrated on a specific part, the elastic sheet is capable of flexibly receiving the pressure applied by the object. Therefore, compared to other types of sensors, a pressure detection error resulting from deformation of a contact face is less likely to occur. Accordingly, information relating to pressure distribution is more accurately detected and used to control the air mattress. Furthermore, according to the present invention, the air mattress device can be configured to interpose the light receiving parts serving as a pressure sensing portion between the air mattress and a user. In other words, even when an obj ect is placed in the immediately vicinity of the pressure sensing portion, an error is less likely to occur in detection by the pressure distribution detection means, because of the flexibility of the elastic sheet as described above. Therefore, for example, by placing an object or a human body on the air mattress so as to directly contact the elastic sheet, precise detection of pressure distribution becomes possible. Further, since the flexible elastic sheet is employed, direct contact of a human body and the sensor or the like does not deteriorate sleeping comfort of the air mattress.

In the present invention, it is preferable that the gas amount adjustment means adjusts the amount of gas filled in each of the plurality of air cells so that a pressure applied to the elastic sheet does not surpass a first predetermined value.

This prevents concentration of a pressure applied to an object on the air mattress on one point. Thus, when a human body is placed on the air mattress, it is possible to prevent pressure ulcer or the like caused by application of a large pressure to a specific body part of the human body. This also improves the sleeping comfort.

In the present invention, it is preferable that, when a maximum value of pressure applied to an area in the elastic sheet opposed to at least one of the air cells continuously surpasses a second predetermined value for a predetermined period of time or longer, the gas amount adjustment means decreases the amount of gas filled in the at least one of the air cells.

Thus, when a human body is placed on the air mattress, it is possible to prevent a large pressure from being applied for a long period of time to a specific body part of the human body. Therefore, pressure ulcer is prevented more effectively, and sleeping comfort is further improved.

In the present invention, it is preferable that the gas amount adjustment means adjusts the amount of gas filled in each of the air cells so that inner faces of each of the air cells do not contact each other.

This results in avoidance of so-called bottoming-out, prevention of pressure ulcer or the like, and improvement in sleeping comfort.

In the present invention, it is preferable that the gas amount adjustment means adjusts the amount of gas filled in each of the plurality of air cells so as to create time-based variation in the distribution of a pressure applied to the elastic sheet.

Thus, when a human body is placed on the air mattress, it is possible to avoid long-term concentration of a pressure on a specific body part of the human body. Therefore, pressure ulcer is prevented more effectively, and sleeping comfort is further improved.

In the present invention, it is preferable that the gas amount adjustment means periodically varies the amount of gas filled in each of the air cells.

Thus, when a human body is placed on the air mattress, a pressure applied to the human body is periodically varied, and therefore it is possible to improve the sleeping comfort and prevent a pressure ulcer or the like.

In the present invention, it is preferable to further include display means for displaying the distribution of a pressure applied to the elastic sheet detected by the pressure distribution detection means.

When a human body is placed on the air mattress, it is possible to monitor an overall distribution of the pressure applied to the human body. Therefore, more important information for preventing a pressure ulcer or the like is fed back to a nurse or the like.

In the present invention, it is preferable to further include: first distribution variation evaluating means for evaluating a variation in the distribution of a pressure between a state of not having an object on the air mattress and a state of having an object on the air mattress, based on the distribution of the pressure applied to the elastic sheet detected by the pressure distribution detection means; and control switch means for switching a state of the air mattress device between a state of controlling the air mattress and a state of not controlling the air mattress, based on an evaluation result evaluated by the first state change evaluating means.

Since the state of the air mattress device is automatically switched between the state of controlling the air mattress and the state of not controlling the air mattress, it is not necessary to manually switch the state depending on whether an object is placed on the air mattress. Therefore, it becomes easier to manage the air mattress device. This also leads to energy savings.

In the present invention, it is preferable to further include: an elastic receiver whose state is switched between a first state of being folded-in and a second state of being inflated at a position adjacent to the air mattress device; second distribution variation evaluating means for evaluating a variation in the distribution of a pressure during a transition of a state of the air mattress from a state of having an object on the air mattress to a state of not having an object on the air mattress, based on the distribution of the pressure applied to the elastic sheet detected by the pressure distribution detection means; fall recognition means for recognizing a timing at which an object placed on the air mattress falls from the air mattress, based on a result of evaluation by the second distribution variation evaluating means; and receiver switch means for switching a state of the elastic receiver from the first state to the second state, based on the timing at which the object falls from the air mattress, the timing having been recognized by the fall recognition means.

With this configuration, if a human body falls out of the air mattress, the elastic receiver is automatically inflated to receive the human body. Therefore, it is not necessary to place a fall protection sheet or the like at a side or the like of a bed in advance. Therefore, such a fall protection sheet or the like will not disturb nursing or the like.

In the present invention, it is preferable to further include object measurement means for measuring at least one of weight and size of an object placed on the air mattress, based on a distribution of pressure applied to the elastic sheet detected by the pressure distribution detection means.

When a human body is placed on the air mattress, it is possible to measure the height and weight needed to diagnose his/her health condition while his/her body is placed. Therefore, a patient on the bed need not to be forced to rise up from the air mattress, and the patient therefore is able to focus on recovering his/her medical condition.

In the present invention, it is preferable that the gas amount adjustment means adjusts an amount of gas filled in each of the plurality of air cells, based on at least one of weight and size of the obj ect measured by the object measurement means.

Thus, when a human body is placed on the air mattress, it is possible to adjust a pressure of the air mattress in accordance with physical characteristics of the human body, on the basis of the height, weight, or the like.

In the present invention, a use of the air mattress device is such that: an air mattress has a plurality of air cells filled with gas; an elastic sheet disposed on a surface of the air mattress, in which sheet a reachable range of light scattered varies in accordance with a magnitude of a pressure applied;; a plurality of light emitting parts which are evenly distributed in the elastic sheet, and which emit light toward the elastic sheet; a plurality of light receiving parts which are respectively positioned close to the plurality of light emitting parts in the elastic sheet, and which receives the light scattered in the elastic sheet; and the air mattress device is used with an object placed on the air mattress so that the elastic sheet is positioned between the air mattress and the object.

According to the use of the air mattress device of the present invention, pressure applied to the elastic sheet is more precisely detected. When an object is placed on the air mattress with the elastic sheet laid under the air mattress, a pressure is applied by the object to the elastic sheet via the air mattress. Therefore, the pressure applied by the object to the air mattress is dispersed and then propagated to the elastic sheet. In addition, the variation in the pressure applied to the air mattress is also relieved and then propagated to the elastic sheet. On the other hand, in the present invention, an object placed on the air mattress is positioned closer to the elastic sheet, compared with the above case. Therefore, a pressure applied by the object is propagated without dispersion in the air mattress, and the variation in the pressure can be propagated more accurately. This enables more precise control of the air mattress device on the basis of detected pressure.

### Brief Description of the Drawings

[FIG. 1] A schematic diagram showing an air mattress device, which is an embodiment of the present invention.
[FIG. 2] FIG. 2(a) is a top view of a sensor device shown in FIG. 1. FIG. 2 (b) is a longitudinal sectional view taken along the line b-b of FIG. 2(a).
[FIG. 3] An enlarged view of the periphery of leading ends of optical fibers shown in FIG. 2(b).
[FIG. 4] A block diagram showing a structure of the air mattress device shown in FIG. 1.
[FIG. 5] A diagram showing an example of pressure distribution detected by the sensor device shown in FIG. 1.
[FIG. 6] Diagrams illustrating fall management control in the air mattress device shown in FIG. 1.
[FIG. 7] A flowchart showing an overall flow of control in the air mattress device shown in FIG. 1.

### Description of Reference Numerals

1 air mattress device
2 air mattress
3 sensor device
8 sensor control unit
9 air pump
10 air cell
20 air mattress control device
31 surface sheet

### Best Mode for Carrying Out the Invention

The following description relates to an air mattress device, which is a preferred embodiment of the present invention.

### <Overall schematic structure>

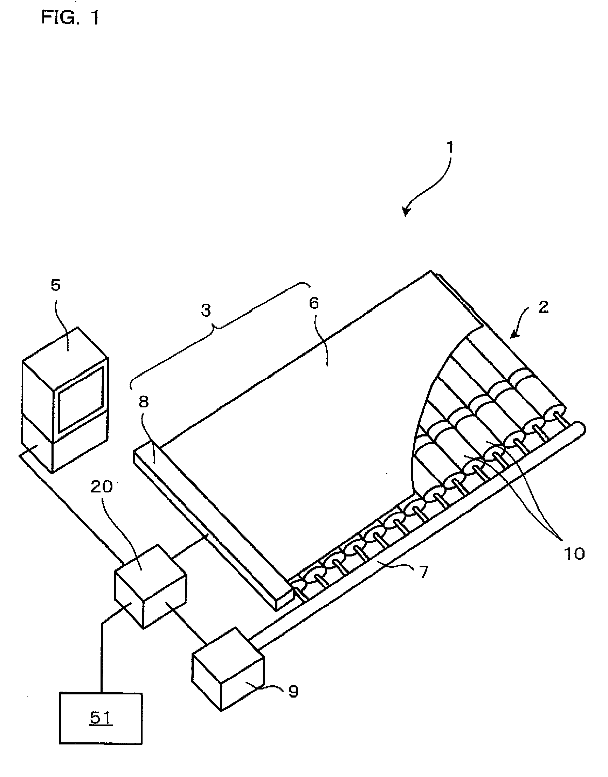

FIG. 1 is a diagram schematically showing an overall structure of this embodiment, An air mattress device 1 has an air mattress 2, a sensor device 3, a display 5, an air pump 9, an air mattress control device 20, and an air bag 51.

The air mattress 2 has a plurality of air cells 10 filled with gas. Each of the air cells 10 has a bag-like cylindrical shape. These air cells 10 are arranged in one direction so that a side face of one air cell contacts a side face of another air cell, and are fixed to each other to form a single mat-like shape.

As described later, the sensor device 3 detects the distribution of pressure applied to a surface. The sensor device 3 has a sensor sheet 6 and a sensor control unit 8. The sensor control unit 8 is electrically connected to the air mattress control device 20. The sensor control unit 8 detects the distribution of pressure applied to a surface of the sensor sheet 6, and then transmits a signal relating to the detected pressure distribution to the air mattress control device 20. The sensor device 3 is placed on the air mattress 2 so as to be positioned above the air mattress 2. When using the air mattress device 1, a human body is placed on the sensor sheet 6.

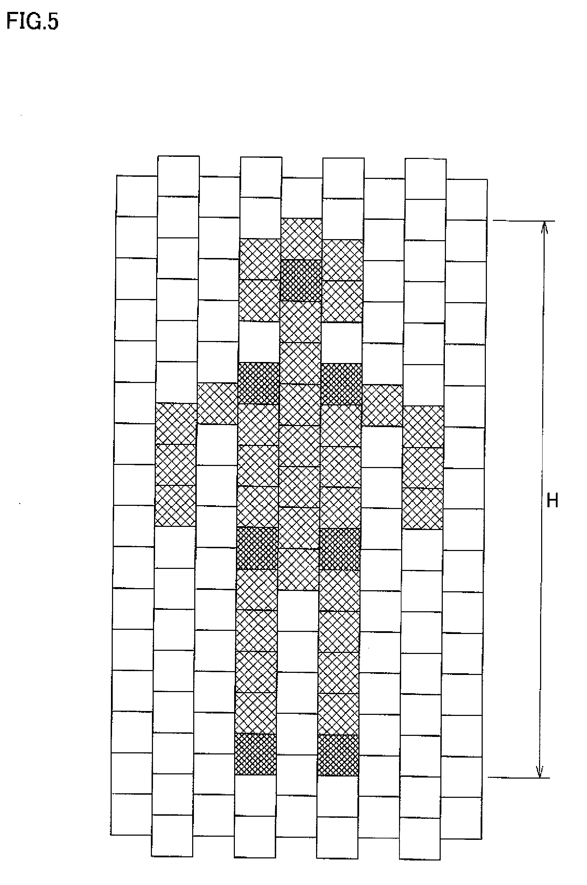

According to a signal relating to image information transmitted from the air mattress control device 20, the display 5 displays the distribution of pressure applied to the sensor sheet 6 (see FIG. 5). This enables a visual check of the distribution of pressure applied to a human body, thereby allowing more appropriate posture change to prevent a pressure ulcer.

The air pump 9 varies the amount of gas in each of the air cells 10. The air pump 9 is connected to each of the air cells 10 through an air tube 7. Through the air tube 7, the air pump 9 selectively supplies gas to the air cells 10, or selectivity aspirates gas from the air cells 10. The air pump 9 is electrically connected to the air mattress control device 20. In response to a control performed by the air mattress control device 20, the air pump 9 selectively adjusts the amount of gas filled in each of the air cells 10.

The air mattress control device 20 controls the display 5, the air pump 9, and the air bag 51. As described above, the air mattress control device 20 is electrically connected to the sensor control unit 8, and receives a signal relating to pressure distribution transmitted from the sensor control unit 8. Based on the received signal relating to pressure distribution, the air mattress control device 20 controls, as described later, the display 5, the air pump 9, and the air bag 51 (will be described later.)

### <Sensor>

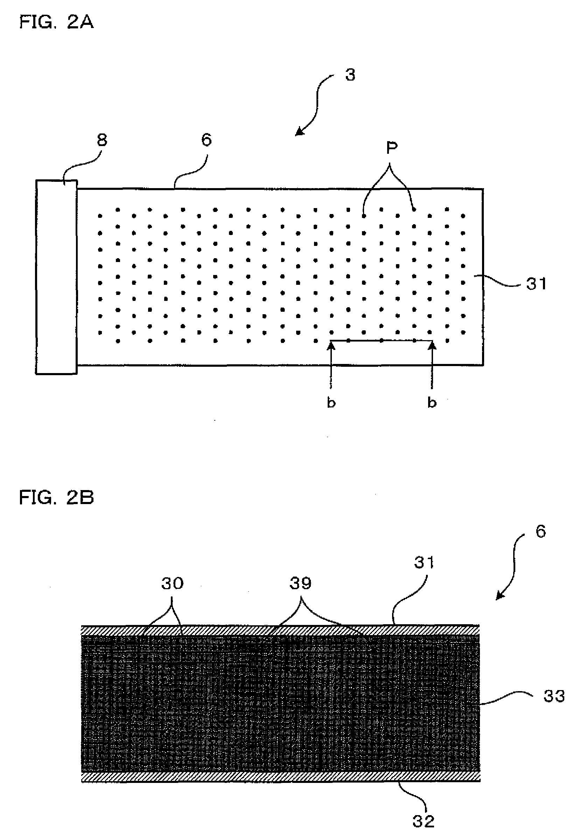

FIG. 2 (a) is a top view of the sensor device 3. FIG. 2 (b) is an enlarged sectional view taken along a line b-b of FIG. 2(a). The sensor sheet 6 has surface sheets 31 and 32, an elastic sheet 33, and a plurality of optical fiber bundles 30.

The elastic sheet 33 has a rectangular plane shape, and is sandwiched by two surface sheets 31 and 32, each having a similar shape and size to those of the elastic sheet 33. Inside the elastic sheet 33, the plurality of optical fiber bundles 30 are embedded. As shown in points P of FIG. 2 (a) , the optical fiber bundles 30 are positioned so that respective leading ends 39 of the optical fiber bundles 30 are uniformly arranged in a grid-like manner as viewed from the top face of the sensor device 3. The not-shown other end of each of the optical fiber bundles 30 opposite to the leading end 39 is connected to the sensor control unit 8.

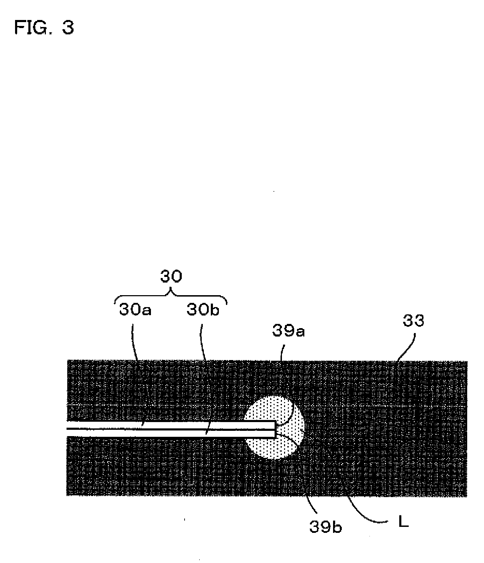

FIG. 3 is an enlarged sectional view of an area surrounding a leading end of one of the optical fiber bundles 30 in the sensor sheet 6. Each of the optical fiber bundles 30 has an emitting fiber 30a and a receiving fiber 30b. The sensor control unit 8 selectively injects light into the emitting fiber 30a, The injected light is emitted from an emitting part 39a of the emitting fiber 30a, and then scattered inside the elastic sheet 33. A region L in FIG. 3 shows a range of the light scattered (hereinafter, a light-reachable range). The reachable range of light varies depending on the materials and density of the elastic sheet 33, the intensity of emitted light, or the like.

The receiving fiber 30b is positioned so that the leading end thereof is close to the emitting part 39a of the emitting fiber 30a. The receiving fiber 30b receives the scattered light in the region L through the receiving part 39b provided at the leading end of the receiving fiber. The received light is transmitted to the sensor control unit 8 connected to an end, of the receiving fiber 30b, opposite to the receiving part 39b. The sensor control unit 8 detects the intensity of the transmitted light. The intensity of the scattered light in the region L depends on the size of the region L, the materials and density of the elastic sheet 33, or the like.

With this configuration of the sensor device 3, the sensor control unit 8 detects applied pressure as follows. When a pressure is applied to the sensor device 3, the pressure deforms a portion of the elastic sheet around the position where the pressure is applied (hereinafter, pressure-applied position). With the deformation, also deformed is a portion near the leading end 39, of one of the optical fiber bundles 30 shown in FIG. 3, corresponding to the pressure-applied position of the elastic sheet. Through this, the size and shape of the region L are varied. Further, the intensity of the scattered light in the region L is also varied according to the pressure applied. In short, the intensity of the scattered light in the region L varies depending on the location and magnitude of the pressure applied. The sensor control unit 8 detects the intensity of the scattered light received by the receiving fiber 30b, thereby detecting the magnitude and location of the pressure applied to the sensor sheet 6.

As shown in FIG. 2, the leading ends 39 of the optical fiber bundles 30 are arranged in the sensor sheet 6 in a grid-like manner. The sensor control unit 8 detects the intensity of scattered light in the periphery of each of the leading ends of the optical fiber bundles 30 arranged in a grid-like manner. As a result, the distribution of pressure applied to the sensor sheet 6 is detected across almost the whole surface of the sensor sheet 6.

### <Air mattress control device>

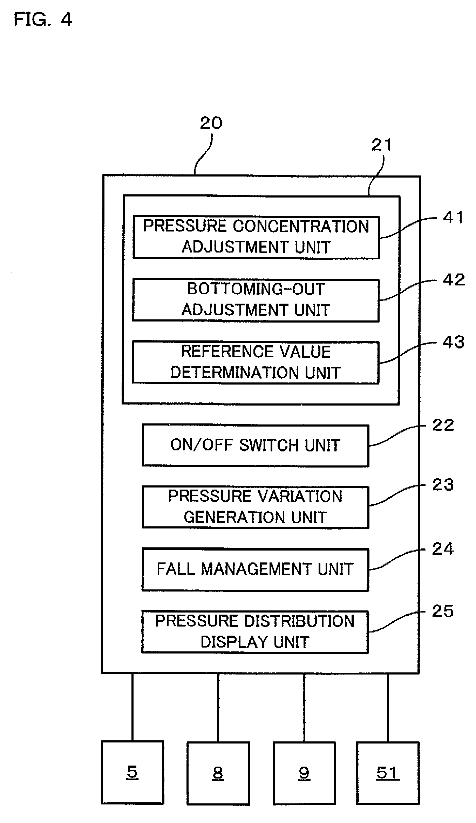

FIG. 4 shows a structure of the air mattress control device 20. The air mattress control device 20 has a pressure distribution adjustment unit 21, an ON/OFF switch unit 22, a pressure variation generation unit 23, a fall management unit 24, and a pressure distribution display unit 25.

The air mattress control device 20 has a general-purpose computer. This computer incorporates hardware, such as a CPU, a ROM, a RAM, a hard disk, an FD drive, a CD drive, or the like. In the hard disk, stored are various kinds of software including a program for the computer to function as the air mattress control device 20. This program can be stored in a removable storage medium such as a CD-ROM, an FD, and an MO, so that the program can be installed to an intended computer. Combining these hardware and software constructs the pressure distribution adjustment unit 21 and the like. Note that the air mattress control device 20 is not limited to a device adopting a general-purpose computer. It may be a device specialized in controlling the air mattress.

The pressure distribution adjustment unit 21 has a pressure concentration adjustment unit 41, a bottoming-out adjustment unit 42, and a reference value determination unit 43. The pressure concentration adjustment unit 41 adjusts the amount of gas in each of the air cells 10 of the air mattress 2 so that pressure is not concentrated on a particular portion a human body placed on the air mattress 2 in terms of location and/or time.

Specifically, the pressure distribution adjustment unit 21 evaluates the magnitude of pressure applied to the sensor sheet 6, based on a signal relating to pressure distribution transmitted from the sensor control unit 8. When the pressure applied to the sensor sheet 6 is a predetermined pressure value P1 or more, the pressure distribution adjustment unit controls the air pump 9 so as to, for example, decrease the amount of gas in at least one air cell 10 out of the air cells 10 corresponding to a location to which the pressure of more than P1. is applied, and increase the amount of gas in at least another air cell 10 out of the air cells 10 around that one air cell 10. Thus, by controlling the amount of gas in each of the air cells 10, the pressure distribution adjustment unit 21 controls the air pump 9 so as to keep the pressure applied to the sensor sheet 6 from surpassing the predetermined pressure.

When a human body is placed on the air mattress 2, the weight of the human body is supported by protruded parts of the human body. When a pressure of a certain level or higher is continuously applied for a long period, the amount of flesh given in each part of the human body defines how easily the pressure causes a pressure ulcer or pain. For example, even if a pressure is concentrated on a well-fleshed body part such as thigh or the like, a pain or the like is less likely to occur. In contrast, concentration of a pressure is more likely to cause a pain or the like in a less-fleshed bony part, such as a protruded part of a scapula. Thus, pressure concentration on such a bony part or the like has to be avoided. On this account, the pressure distribution adjustment unit 21 may adjust the amount of gas in each of the air cells 10, according to the part of a human body corresponding to each pressure-applied position of the sensor sheet 6. For example, based on a signal relating to pressure distribution transmitted from the sensor control unit 8, it is possible to perform a control such that, when a pressure of P1 or higher is applied to a body part where pressure concentration should be avoided, the amount of gas in the air cell 10 corresponding to the body part is decreased, and that, when a pressure of P1 or higher is applied to a body part where pressure concentration is acceptable, the amount of gas in the corresponding air cell 10 kept the same.

Meanwhile, when a predetermined magnitude of pressure is continuously applied for a certain period of time or more, a pressure ulcer or pain may occur even in a body part where a pressure ulcer or pain due to concentration of pressure is less likely to occur. To prevent this problem, the pressure distribution adjustment unit 21 adjusts the amount of gas in each of the air cells 10 based on the magnitude of the pressure and the duration of applying the pressure.

Specifically, the pressure distribution adjustment unit 21 keeps monitoring the pressure applied to the sensor sheet 6. When a maximum value of the pressure applied to an area of the sensor sheet 6 opposed to one or more of the air cells 10 is continuously a certain pressure value P2 (P2<P1) or higher, the pressure distribution adjustment unit 21 controls the air pump 9 so as to decrease the amount of gas in the one or more of the air cells 10 corresponding to the location exposed to the pressure of P2 or higher. As described above, the pressure distribution adjustment unit 21 may adjust the amounts of gas in two or more of air cells 10. For example, it is possible to decrease the amount of gas in at least one of the air cells 10 corresponding to the location exposed to a pressure of P2 or higher, while increasing the amount of gas in another one of the air cells 10 around that at least one of the air cell 10.

The bottoming-out adjustment unit 42 adjusts the amount of gas in each of the air cells 10 so that a specific body part of a human body placed on the air mattress 2 does not directly contact a bed floorboard where the air mattress 2 placed, due to insufficient gas in each of the air cells 10.

Specifically, based on a signal relating to pressure distribution transmitted from the sensor control unit 8, the bottoming-out adjustment unit 42 judges whether inner faces of each of the air cells 10 contact each other thereby causing a human body to directly contact a bed floorboard or the like. In other words, the bottoming-out adjustment unit 42 judges whether bottoming-out occurs in each of the air cells 10. Whether or not the bottoming-out occurs is judged depending on whether a magnitude of pressure applied to the sensor sheet 6 is, for example, a predetermined value P3 (P3>P1) or higher. Alternatively, whether or not the bottoming-out occurs is judged based on the pressure distribution in an area of the sensor sheet 6 opposed to the air cells 10. For example, when bottoming-out causes the inner faces of one of the air cells 10 to contact each other, uniform pressure distribution is detected in a predetermined region in the area, of the sensor sheet 6, corresponding to the one of the air cells 10. Therefore, bottoming-out is detected when detecting the uniform pressure distribution in the predetermined region in the area, of the sensor sheet 6, corresponding to that one of the air cells 10.

When bottoming-out is detected in at least one of the air cells 10, the bottoming-out adjustment unit 42 control the air pump 9 so as to increase the amount of the gas in that at least one of the air cells 10.

The reference value determination unit 43 determines reference values for controlling the amount of gas in each of the air cells 10, based on the weight and/or height of a human body derived based on a signal relating to pressure distribution transmitted from the sensor control unit 8.

Specifically, first, the reference value determination unit 43 derives the height and/or weight of a human body based on pressure distribution (object measurement means). FIG. 5 shows an example of pressure distribution transmitted from the sensor control unit 8. The reference value determination unit 43 derives the height of a human body from such pressure distribution and the arrangement intervals between leading ends 39 of the optical fiber bundles 30 arranged inside the sensor sheet 6. Then, the weight of the human body is derived from the pressure distribution and the space occupied by the leading ends 39 of the optical fiber bundles 30 arranged inside the sensor device 3. Next, based on the weight and/or height thus derived, the reference value determination unit 43 determines reference values such as the above-described p1, p2, and p3 for controlling the amount of gas in each of the air cells 10. Based on the reference values, the pressure distribution adjustment unit 21 controls the amount of gas in each of the air cells 10. Note that the reference values may be adjusted based on the BMI (Body Mass Index) obtained from the height and weight derived.

Based on a signal relating to pressure distribution transmitted from the sensor control unit 8, the ON/OFF switch unit 22 evaluates a variation in the distribution of pressure applied to the sensor sheet 6 between a state of not having a human body on the air mattress 2 and a state of having a human body on the air mattress 2. Based on the evaluation result, the ON/OFF switch unit 22 switches a state of the air mattress device 1 between ON state and OFF state. Here, the ON state of the air mattress device 1 means that the air mattress device 1 is controlling the air mattress 2; e.g. , adjusting the amount of gas of the air mattress 2. The OFF state of the air mattress device 1 means that the air mattress device 1 is not controlling the air mattress 2. Note that it is possible to switch the ON and OFF states of a main power supply of the air mattress, instead of, or at the same time of, switching the control of the air mattress 2.

Specifically, the ON/OFF switch unit 22 first judges if there is a state transition between the state of not having a human body on the air mattress 2 and the state of having a human body on the air mattress. Whether a human body is placed on the air mattress 2 is judged based on a weight derived from pressure distribution. This can be also done, based on a height derived from pressure distribution.

Next, when it is judged that there is a state transition between the state of not having a human body on the air mattress 2 and the state of having a human body on the air mattress, the ON/OFF switch unit 22 evaluates how the pressure applied to the sensor sheet 6 varies during the transition. For example, when the pressure varies slowly and the weight value of the human body decreases over a certain period of time, it is judged that the human body on the air mattress 2 has voluntarily gotten out of the air mattress 2, or the like. On the other hand, when the pressure changes rapidly and the weight value of the human body detected by the sensor sheet 6 decreases in a short time, it is judged that the human body has fallen out of the air mattress 2, as described later.

For example, when the ON/OFF switch unit 22 judges that the human body on the air mattress 2 has voluntarily gotten out of the air mattress 2 or the like, as described above, the ON/OFF switch unit 22 switches the state of the air mattress device 1 between ON state and OFF state. Note that the ON/OFF switch unit 22 may switch the state of the air mattress device 1 to OFF or ON when the ON/OFF switch unit 22 judges that a state of not having a human body or the state of having a human body continues for a predetermined period of time or more.

The pressure variation generation unit 23 creates time-based variation in the amount of gas in each of the air cells 10 through the air pump 9. For example, the pressure variation generation unit 23 increases or decreases the amount of gas in a air cell 10 randomly selected out of the plurality of the air cells 10 in the air mattress 2. Further, the pressure variation generation unit 23 periodically varies the amount of gas in a specific group of the air cells 10. Further, the pressure variation generation unit 23 periodically varies the amount of gas in the plurality of air cells 10 so as to undulate the entire air mattress 2. Thus, with the pressure variation generation unit 23, the amount of gas in each of the air cells 10 is varied on a time-basis. It is therefore possible to prevent continuous application of a constant magnitude of pressure to a specific body part of a human body for a long period of time. As the result, a pressure ulcer is prevented and sleeping comfort is improved.

Based on a signal relating to pressure distribution transmitted from the sensor control unit 8, the pressure variation generation unit 23 may determine whether to create time-based variation in the amount of gas in each of the air cells 10. For example, it is not preferable to forcibly vary the amount of gas under a situation where pressure is concentrated on a particular body part of a human body placed on the air mattress 2, because this may worsen the pressure concentration. In that case, the pressure variation generation unit 23 does not create the time-based variation in the amount of gas. Alternatively, the pressure variation generation unit 23 may vary the amount of gas after the pressure concentration adjustment unit 41 adjusts the amount of gas to eliminate the pressure concentration.

In addition, the pressure distribution adjustment unit 21 and the pressure variation generation unit 23 may simultaneously adjust the amount of gas in each of the air cells 10. Alternatively, each of these adjustments may be separately performed so that, for example, the adjustment is switched between an adjustment by the pressure distribution adjustment unit 21 and an adjustment by the pressure variation generation unit 23.

Based on a signal relating to pressure distribution transmitted from the sensor control unit 8, the fall management unit 24 evaluates a variation in distribution of the pressure applied to the sensor sheet 6 between the state of not having a human body on the air mattress 2 and the state of having a human body on the air mattress 2. Based on the evaluation result, the fall management unit 24 controls the operation of the air bag 51.

Specifically, first, the fall management unit 24 judges if there is a state transition between from the state of having a human body on the air mattress on the air mattress 2 to the state of not having a human body. Whether or not a human body is placed on the air mattress 2 is judged based on a weight derived from pressure distribution. This can be also done based on a height derived from pressure distribution.

Next, it is judged that there is the state transition from the state of having a human body on the air mattress on the air mattress 2 to the state of not having a human body, the fall management unit 24 evaluates the variation in the pressure applied to the sensor sheet 6 during the transition. Then, based on the evaluation result, whether the human body on the air mattress 2 has fallen out of the air mattress 2 is judged. For example, as is already mentioned, when the pressure varies rapidly and the weight value of the human body on the air mattress 2 detected by the sensor sheet 6 decreases in a short time, it is judged that the human body has fallen out of the air mattress 2.

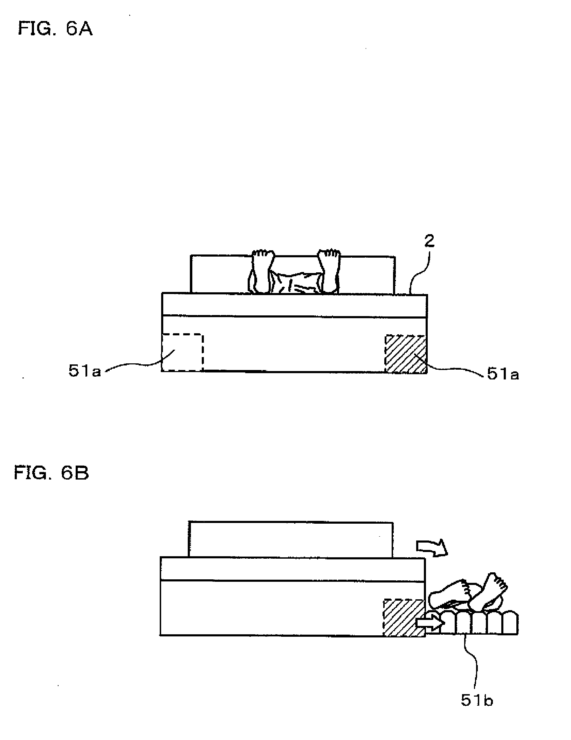

When it is judged that the human body has fallen out of the air mattress 2, the fall management unit 24 controls the air bag 51 so that the air bag 51 receives the human body. As shown in FIG. 6 (a) , the air bag 51 is normally folded into the left and/or right of the bed having thereon the air mattress 2 disposed. However, controlled by the fall management unit 24, the air bags 51 changes its form from a folded-in state 51a to a state 51b of being inflated at a side of the bed, as shown in FIG. 6(b). Thus, the human body is received by the flexible air bag 51, thereby preventing injuries or the like caused by an unexpected fall. Note that, an elastic sheet having a certain level of flexibility or the like may be used in place of the air bag 51.

Based on information relating to pressure distribution transmitted from the sensor device 3, the pressure distribution display unit 25 transmits to the display 5 a signal relating to image information for showing pressure distribution. As described above, the display 5 displays the pressure distribution according to the transmitted information relating to image information.

### <Control flow>

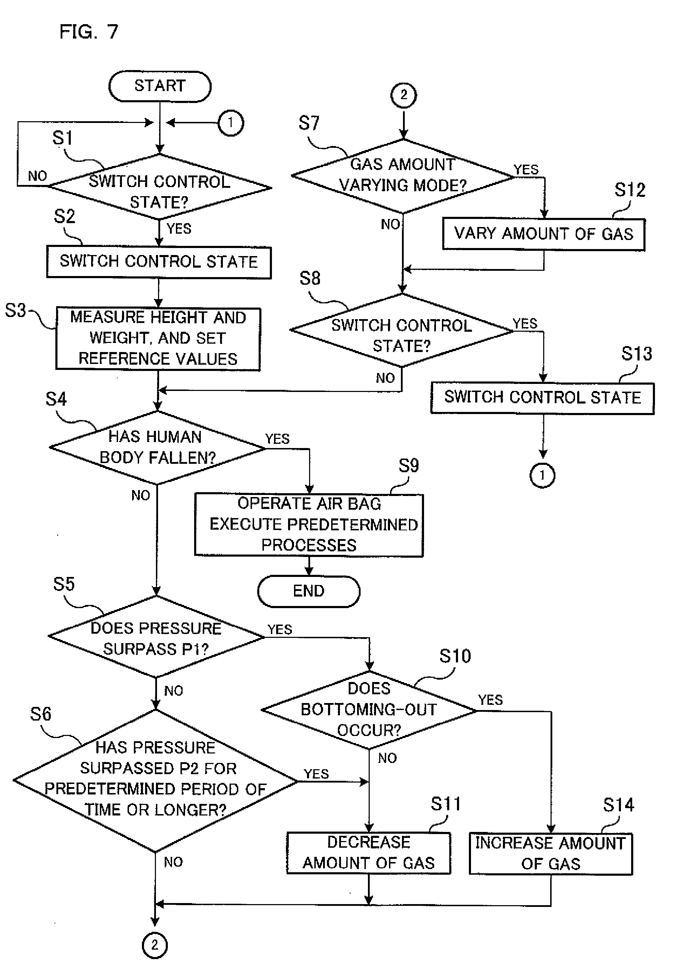

The followings are descriptions of overall flow of a control process by the air mattress device 1 having the above-described configuration. FIG. 7 is a flowchart showing an overall flow of the control by the air mattress device 1.

First, the ON/OFF switch unit 22 determines whether to enter a state where the air mattress 2 is controlled by the air mattress device 1, depending on presence or absence of a human body on/from the air mattress 2 (S1). When the ON/OFF switch unit 22 determines not to enter the state where the air mattress 2 is controlled, S1 is repeated. (S1, NO).

When the ON/OFF switch unit 22 determines to enter the state where the air mattress 2 is controlled, the ON/OFF switch unit 22 switches the control state of the air mattress device 1 (S2). Then, the reference value setting unit 43 sets each of the reference values used for pressure adjustment, based on the height or weight of a human body on the air mattress 2 (S3).

Then, the fall management unit 24 judges whether the human body has fallen out of the air mattress 2 (S4). When it is judged that the human body has fallen (S4, YES) , the fall management unit 24 causes the air bag 51 to operate, executes a predetermined process for the case where a human body is falling, and then completes the control of the air mattress device 1 (S9). The process executed at the time where a human body is falling may include a process of producing a predetermined alarming sound by the fall management unit 24.

When the fall management unit 24 judges that the human body has not fallen (S4, NO), the pressure concentration adjustment unit 41 judges whether the pressure applied to the sensor sheet 6 surpasses the predetermined value P1 (S5). When it is judged that the pressure surpasses P1 (S5, YES), the pressure concentration adjustment unit 41 further judges whether bottoming-out occurs (S10). When it is determined that bottoming-out occurs (S10, YES), the pressure concentration adjustment unit 41 increases the amount of gas in at least one predetermined air cell 10 out of the air cells 10 (S14). Therefore, bottoming-out is avoided. Then, the process of S7 is executed.

When the pressure concentration adjustment unit 41 judges that bottoming-out does not occur (S10, NO), the pressure concentration adjustment unit 41 decreases the amount of gas of the at least one predetermined air cell 10 (S11). This prevents concentration of a pressure on a specific body part of the human body. Then, the process of S7 is executed.

When, in S5, the pressure concentration adjustment unit 41 judges that the pressure applied to the sensor sheet 6 does not surpass the predetermined value P1, the pressure concentration adjustment unit 41 judges whether application of a pressure surpassing P2 lasted a predetermined period of time or longer (S6). When it is judged that the application of the pressure lasted for the predetermined period of time or longer (S6, YES) , the pressure concentration adjustment unit 41 decreases the amount of gas of at least one predetermined air cell 10 out of the air cells 10 (S10), and then executes the process of S7. On the other hand, when it is judged that duration of applying a pressure surpassing P2 is shorter than the predetermined time (S6, NO), the process of S7 is executed.

Then, it is judged whether the pressure variation generation unit 23 is in a gas amount varying mode where an amount of gas is periodically varied (S7). The mode of the pressure variation generation unit 23 may be manually switched to the gas amount varying mode, or automatically switched at a predetermined time interval. When it is judged that the mode is in the gas amount varying mode (S7, YES), the pressure variation generation unit 23 periodically varies the amount of gas in each of the air cells 10 (S12). Then, the process of S8 is executed. When it is judged that the mode is not in the gas amount varying mode (S7, NO), the process of S8 is executed.

Then, the ON/OFF switch unit 22 judges whether to switch the control state of the air mattress device 1, depending on whether the human body has left the air mattress 2 (S8). When the ON/OFF switch unit 22 determines to switch the control state (S8, YES), the control state of the air mattress device 1 is switched (S13), and the process returns to S1. When it is determined not to switch the control state (S8, NO) , the process returns to S4.

### <Effects>

The air mattress device having the above-described configuration provides following advantageous effects. First, the sensor used in this embodiment has an elastic sheet between a contact face with an object or the like and optical fibers, thereby providing excellent responsivity to pressure applied by an object. That is, even when pressure is not uniformly applied in the contact face, such as the case pressure is concentrated on a specific part, deformation of the elastic sheet allows the sensor to flexibly receive pressure from the object. On the other hand, with another type of sensor, an error in pressure detection may be caused by local and significant deformation of the sensor, such as wrinkles in the sensor itself resulting from distortion caused by pressure concentrated on one point. With the sensor of this embodiment, such an error is less likely to occur, and the air mattress therefore is controlled using information relating to more accurately detected pressure distribution.

In addition, according to the sensor used in this embodiment, it is possible to use the air mattress device with the sensor disposed on the air mattress. Although the sensor is disposed on the air mattress, an error resulting from directly placing a human body on the sensor is smaller in pressure detection, as described above. This is because the sensor itself has flexibility. The direct contact of a human body and the sensor enables more precise pressure detection. In addition, since the sensor has flexibility, sleeping comfort is not deteriorated even if a human body directly contacts the sensor.

Further, the sensor of this embodiment has a configuration that the deformation of the elastic sheet by pressure is sensed in the form of variation in scattered light. Therefore, the sensor has excellent responsivity and high sensitivity, and is capable of delicately sensing a variation in a pressure applied by a human body placed on the air mattress. Furthermore, with the configuration that a flexible elastic sheet protects the leading ends of optical fibers, the sensor has excellent durability, and deterioration in the performance thereof is restrained.

Moreover, with the configuration in which a pressure is detected in the form of variation in scattered light, pressure detection is not affected by electromagnetic wave noise. Therefore, it is possible to have the air mattress device of this embodiment normally operate, unaffected by electromagnetic waves generated by an electronic device, even in an environment where many electronic devices are heavily used; e.g., in medical-related places where many diagnostic devices are disposed around a patient.

### <Modified Example>

A preferred embodiment of the present invention has been described above. However, the present invention is not limited to the above-described embodiments. Various changes can be made within the scope of the claims.

For example, in the above-described embodiment, the sensor device 3 is disposed on the air mattress 2. However, the sensor device 3 may be disposed under the air mattress 2.

In the above-described embodiment, the leading ends 39 of the optical fiber bundles 30 are embedded in the elastic sheet 33 of the sensor device 3. However, the sensor device 3 may be configured so that a hollow space is formed around each of the leading ends in the elastic sheet 33 and the internal surface of the hollow space having a predetermined range of light-scattering rate. Also with this configuration, pressure applied to the sensor sheet 6 deforms the hollow space around each of the leading ends 39. By detecting a variation in the intensity of the scattered light in the space, pressure distribution can be detected.

### Industrial Applicability

An air mattress device of the present invention detects a pressure using a sensor having an elastic sheet, and light emitting parts and light receiving parts disposed within the elastic sheet. Therefore, an error in pressure detection is less likely to occur. Accordingly, the present invention is applicable to applications in which appropriate control is needed based on detected pressure. In addition, since an elastic sheet is used, the present invention is applicable to applications in which flexibility is required.

## Claims

1. An air mattress device comprising:
an air mattress having a plurality of air cells filled with a gas;
an elastic sheet disposed on a surface of the air mattress, in which sheet a reachable range of light scattered varies in accordance with a magnitude of a pressure applied;
a plurality of light emitting parts which are evenly distributed in the elastic sheet, and which emit light toward the elastic sheet;
a plurality of light receiving parts which are respectively positioned close to the plurality of light emitting parts in the elastic sheet, and which receives the light scattered in the elastic sheet;
pressure distribution detection means for detecting distribution of a pressure applied to the elastic sheet based on intensity of light received by each of the plurality of light receiving parts; and
gas amount adjustment means for adjusting an amount of gas filled in each of the plurality of air cells based on the distribution of pressure applied to the elastic sheet detected by the pressure distribution detection means.

2. The air mattress device according to Claim 1, wherein the gas amount adjustment means adjusts the amount of gas filled in each of the plurality of air cells so that a pressure applied to the elastic sheet does not surpass a first predetermined value.

3. The air mattress device according to Claim 1, wherein, when a maximum value of pressure applied to an area in the elastic sheet opposed to at least one of the air cells continuously surpasses a second predetermined value for a predetermined period of time or longer, the gas amount adjustment means decreases the amount of gas filled in the at least one of the air cells.

4. The air mattress device according to any one of Claims 1 to 3, wherein the gas amount adjustment means adjusts the amount of gas filled in each of the air cells so that inner faces of each of the air cells do not contact each other.

5. The air mattress device according to any one of Claims 1 to 4, wherein the gas amount adjustment means adjusts the amount of gas filled in each of the plurality of air cells so as to create time-based variation in the distribution of a pressure applied to the elastic sheet.

6. The air mattress device according Claims 5, wherein the gas amount adjustment means periodically varies the amount of gas filled in each of the air cells.

7. The air mattress device according to Claims 1 to 6, further comprising display means for displaying the distribution of a pressure applied to the elastic sheet detected by the pressure distribution detection means.

8. The air mattress device according to any one of Claims 1 to 7, further comprising: first distribution variation evaluating means for evaluating a variation in the distribution of a pressure between a state of not having an object on the air mattress and a state of having an object on the air mattress, based on the distribution of the pressure applied to the elastic sheet detected by the pressure distribution detection means; and
control switch means for switching a state of the air mattress device between a state of controlling the air mattress and a state of not controlling the air mattress, based on an evaluation result evaluated by the first state change evaluating means.

9. The air mattress device according to any one of Claims 1 to 8, further comprising:
an elastic receiver whose state is switched between a first state of being folded-in and a second state of being inflated at a position adjacent to the air mattress device;
second distribution variation evaluating means for evaluating a variation in the distribution of a pressure during a transition of a state of the air mattress from a state of having an object on the air mattress to a state of not having an object on the air mattress, based on the distribution of the pressure applied to the elastic sheet detected by the pressure distribution detection means;
fall recognition means for recognizing a timing at which an object placed on the air mattress falls from the air mattress, based on a result of evaluation by the second distribution variation evaluating means; and
receiver switch means for switching a state of the elastic receiver from the first state to the second state, based on the timing at which the object falls from the air mattress, the timing having been recognized by the fall recognition means.

10. The air mattress device according to any one of Claims 1 to 9, further comprising object measurement means for measuring at least one of weight and size of an object placed on the air mattress, based on a distribution of pressure applied to the elastic sheet detected by the pressure distribution detection means.

11. The air mattress device according to Claim 10, wherein the gas amount adjustment means adjusts an amount of gas filled in each of the plurality of air cells, based on at least one of weight and size of the object measured by the object measurement means.

12. A use of an air mattress device wherein:
the air mattress has a plurality of air cells filled with gas; an elastic sheet disposed on a surface of the air mattress, in which sheet a reachable range of light scattered varies in accordance with a magnitude of a pressure applied; a plurality of light emitting parts which are evenly distributed in the elastic sheet, and which emit light toward the elastic sheet; a plurality of light receiving parts which are respectively positioned close to the plurality of light emitting parts in the elastic sheet, and which receives the light scattered in the elastic sheet; and
the air mattress device is used with an object placed on the air mattress so that the elastic sheet is positioned between the air mattress and the object.
